# DEMANDE DE BREVET EUROPEEN

(11) **EP 0 840 233 A1**
(43) Date de publication de la demande: **06.05.1998**
(21) Numéro de dépôt: 97402546.2
(22) Date de dépôt: 28.10.1997
(51) Int. Cl.: G06F 12/08

(54) **Circuit électrique pour échanger des données entre un microprocesseur et une mémoire et calculateur comprenant un tel circuit**

(30) Priorité: 05.11.1996 FR 9613464
(71) Demandeur: BULL S.A., 78430 Louveciennes (FR)
(72) Inventeur: Abily, Jack, 78370 Plaisir (FR); Oian, Yu Jun Jean, 95800 Cergy St Christophe (FR)

(57) **Abrégé**

Pour faire entrer un espace mémoire extérieur de l'espace mémoire d'un microprocesseur (43) comprenant une antémémoire, un circuit intégré (42) sert d'interface entre le microprocesseur (43) et une mémoire constituant l'espace mémoire extérieur. Le circuit intégré (42) comprend une pile dimensionnée pour contenir un bloc de données de la mémoire telle que le bloc de la mémoire soit vu comme un ou plusieurs blocs dans l'antémémoire, et un registre appartenant à l'espace mémoire du microprocesseur (43), destiné à contenir les coordonnées d'accès à la mémoire.

## Description

Le domaine de l'invention est celui des échanges de données entre un microprocesseur et une ou plusieurs mémoires distantes dans des systèmes informatiques.

De façon générale, un microprocesseur a pour fonction l'exécution des instructions de programmes contenus dans son espace mémoire. Cet espace mémoire est matérialisé par une mémoire locale et éventuellement divers registres d'entrées-sorties. Ces instructions et les données nécessaires à leur exécution sont accessibles par le microprocesseur en utilisant les moyens d'adressage de son espace mémoire. Cependant, compte tenu des temps d'accès relativement longs de l'ensemble de son espace d'adressage, le microprocesseur est habituellement muni d'une antémémoire (cache memory en anglais) beaucoup plus rapide mais de contenu limité à un certain nombre d'extraits du contenu de la mémoire locale et éventuellement des divers registres d'entrées-sorties. L'antémémoire est adaptée à l'espace d'adressage du microprocesseur. Pour plus de détails sur le fonctionnement des antémémoires, on peut se reporter aux demandes de brevet EP0392932, EP0394115, EP0434483 et EP0543712 déposées au nom de la demanderesse qui décrivent des dispositifs d'accès par un processeur à une mémoire.

Cependant, une exécution par le microprocesseur des instructions de programmes contenus dans un espace mémoire extérieur à son espace mémoire pose le problème de l'inadaptation de son antémémoire à cet espace mémoire extérieur. Il est possible de prévoir dans un circuit d'interface avec le microprocesseur, des registres d'entrée-sortie à l'intérieur de l'espace mémoire du microprocesseur, en communication avec les éléments physiques de l'espace mémoire extérieur pour faire des accès directs aux instructions et aux données nécessaires à leur exécution contenues dans ces éléments physiques. Cependant, si les éléments physiques de l'espace mémoire extérieur sont des mémoires distantes, la latence sur les échanges risque de faire chuter considérablement les performances du microprocesseur dans son exécution de programmes.

L'invention remédie à ces inconvénients en permettant de faire entrer l'espace mémoire extérieur à l'intérieur de l'espace mémoire du microprocesseur.

Un premier objet de l'invention est un circuit électrique comprenant:
- un microprocesseur pour échanger des données avec une mémoire extérieure à l'espace mémoire du microprocesseur, ledit microprocesseur comprenant une antémémoire,
- un circuit intégré pour servir d'interface entre le microprocesseur et la mémoire extérieure,
caractérisé en ce que le circuit intégré comprend:
- une pile dimensionnée pour contenir un bloc de données de la mémoire extérieure, telle que le bloc de la mémoire extérieure soit vu comme un ou plusieurs blocs dans l'antémémoire,
- un registre appartenant à l'espace mémoire du microprocesseur, destiné à contenir les coordonnées d'accès aux blocs de la mémoire extérieure.

Un problème supplémentaire se pose si la largeur du chemin de données dans l'espace mémoire extérieur est différente de la largeur du chemin de données dans l'espace mémoire du microprocesseur. Les dimensions de blocs de données dans l'espace mémoire extérieur peuvent alors ne pas correspondre aux dimensions de blocs de données dans l'antémémoire.

Un deuxième objet de l'invention est un circuit électrique conforme à son premier objet, caractérisé en ce que l'adressage de la pile dans l'espace mémoire du microprocesseur code simultanément une adresse physique de bloc dans la pile et un mode de lecture ou d'écriture dudit bloc.

L'invention sera mieux comprise à l'aide de la description qui suit en référence aux figures.

La figure 1 représente un système informatique avec un calculateur ayant accès à au moins une unité de mémoire étendue selon l'invention.

La figure 2 représente une mise en oeuvre possible du circuit de l'invention dans le système de la figure 1.

La figure 3 représente un premier niveau de raffinement de l'architecture d'un circuit pour mettre en oeuvre l'invention.

La figure 4 montre l'accès par un microprocesseur à un port de circuit conforme à l'invention.

La figure 5 représente l'agencement d'un port de circuit conforme à l'invention.

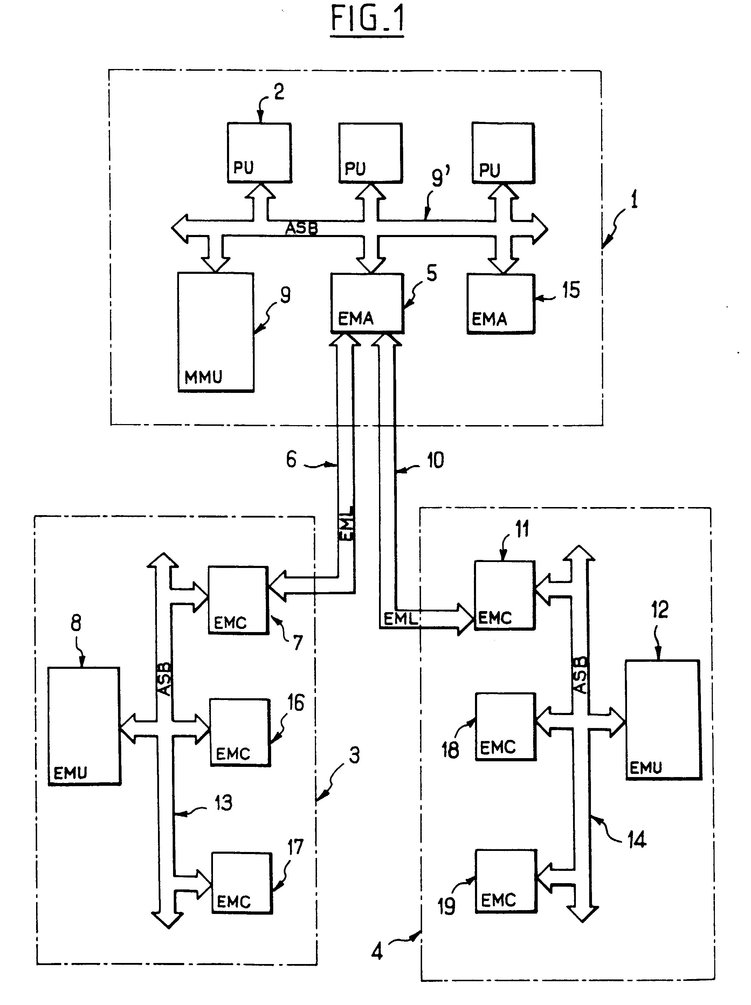

Sur la figure 1, un calculateur 1 comprend une unité de mémoire principale MMU 9 à laquelle accède au moins une unité processeur PU 2 au moyen d'un bus système ASB 9'. Sur le bus ASB 9' sont raccordées une ou plusieurs interfaces EMA d'accès à mémoire étendue. L'interface EMA 5 est reliée à un contrôleur de mémoire étendue EMC 7 situé dans un cabinet 3 distant du calculateur 1, au moyen d'une liaison EML 6. Une liaison EML peut être une liaison série ou une liaison parallèle permettant un transfert d'informations à débit élevé. Le cabinet 3 comprend une unité de mémoire étendue EMU 8 à laquelle accède le contrôleur de mémoire étendue 7 au moyen d'un bus système ASB 13. D'autres contrôleurs EMC 16, 17, sans que la quantité représentée sur la figure ne soit limitative peuvent être prévus pour accéder également à l'unité de mémoire étendue EMU 8 au moyen du bus système 13. Le contrôleur 16 permet par exemple d'échanger des données avec un autre calculateur non représenté, selon le même schéma que pour le calculateur 1. Il est possible de prévoir que l'interface 5 soit également reliée à un contrôleur de mémoire étendue EMC 11 situé dans un cabinet 4 au moyen d'une liaison EML 10. Comme le cabinet 3, le cabinet 4 comprend une unité de mémoire étendue EMU 12 à laquelle accède le contrôleur de mémoire étendue 11 au moyen d'un bus système ASB 14. D'autres contrôleurs EMC 18, 19, sans que la quantité représentée sur la figure ne soit limitative peuvent être prévus pour accéder également à l'unité de mémoire étendue EMU 12 au moyen du bus système 14. Le contrôleur 18 permet par exemple d'échanger des données avec un autre calculateur non représenté, selon le même schéma que pour le calculateur 1. L'unité de mémoire étendue 12 permet de servir de sauvegarde ou d'augmentation de capacité de l'unité de mémoire étendue 8. En sauvegarde, l'unité de mémoire étendue EMU 12 permet la redondance des données mémorisées. En augmentation de capacité, l'unité de mémoire étendue 12 permet de disposer d'une plus grande mémoire étendue.

Le calculateur 1 de la figure 1 présente une deuxième interface EMA 15, reliée elle aussi au bus système 9'. En reliant un premier port de l'interface EMA 15 à un deuxième port du contrôleur EMC 16 et un deuxième port de l'interface 15 à un deuxième port du contrôleur EMC 18, au moyen de liaisons EML non représentées par souci de clarté de la figure, il est possible d'obtenir une redondance des connexions du calculateur 1 avec les cabinets 3 et 4.

Les unités de mémoire étendue EMU 8 et 12 sont subdivisées chacune en 2^{j} pages dont les adresses sont codées sur j bits. Chaque page est à son tour subdivisée en 2^{k} blocs de données dont les adresses sont codées sur k bits. La largeur du chemin de données de l'interface EMA 5 au contrôleur EMC 7 par la liaison EML 6 est de 2^{m} multiplets. Un multiplet est par exemple un octet ou un nonet. Ainsi 2^{m} multiplets constituent un sous bloc d'un bloc de données. Chaque bloc de données contient 2ⁿ sous blocs, adressables sur n bits à l'intérieur d'un bloc. Ainsi l'espace mémoire des unités de mémoire étendue EMU est adressable sur j+k+n bits pour chaque sous bloc. ll en est de même de l'espace mémoire de l'unité de mémoire principale avec éventuellement des valeurs de j et de k différentes.

Dans le calculateur 1, un transbordement de données entre l'unité de mémoire principale MMU 9 et l'unité de mémoire étendue EMU 8 ou l'unité de mémoire étendue EMU 12 se fait à la demande d'une unité processeur PU du calculateur 1. Une unité processeur PU du calculateur 1 peut aussi demander un transbordement direct entre l'unité de mémoire étendue EMU 8 et l'unité de mémoire étendue EMU 12. Pour cela, l'unité processeur PU envoie, sur ordre d'un processus en cours dans l'unité PU, une requête de transbordement à l'interface EMA 5 en lui spécifiant l'unité mémoire source dont seront extraites les données par blocs et l'unité mémoire cible où seront introduites les données par blocs. Si l'unité mémoire source est l'unité de mémoire principale MMU 9, l'unité mémoire cible est l'unité de mémoire étendue EMU 8 ou l'unité de mémoire étendue EMU 12. Si l'unité mémoire source est l'unité de mémoire étendue EMU 8, respectivement 12, l'unité mémoire cible est l'unité de mémoire principale MMU 9 ou l'unité de mémoire étendue EMU 12, respectivement 8. Le processus à l'origine du transbordement spécifie également dans sa requête l'adresse du premier sous bloc dans la mémoire source, l'adresse du premier sous bloc dans la mémoire cible où commence le transbordement et la quantité de sous blocs à transborder. A partir de là, l'interface EMA 5 effectue le transbordement indépendamment de l'unité processeur PU.

Un processus peut demander un transbordement synchrone ou un transbordement asynchrone. Dans le cas d'un transbordement synchrone, le processus est interrompu et ne reprend que lorsque le transbordement est terminé. Un transbordement synchrone nécessite donc d'être rapide. Dans le cas d'un transbordement asynchrone, le processus se poursuit sans attendre la fin du transbordement qui s'exécute de façon indépendante. Pour ne pas pénaliser un processus demandant un transbordement synchrone alors qu'un transbordement asynchrone est en cours, une requête de transbordement synchrone peut interrompre dans l'interface EMA un transbordement asynchrone en cours qui sera repris à la fin du transbordement synchrone. C'est l'interface EMA qui gère les interruptions et les reprises de transbordement, de façon transparente pour les processus exécutés par les unités processeur PU.

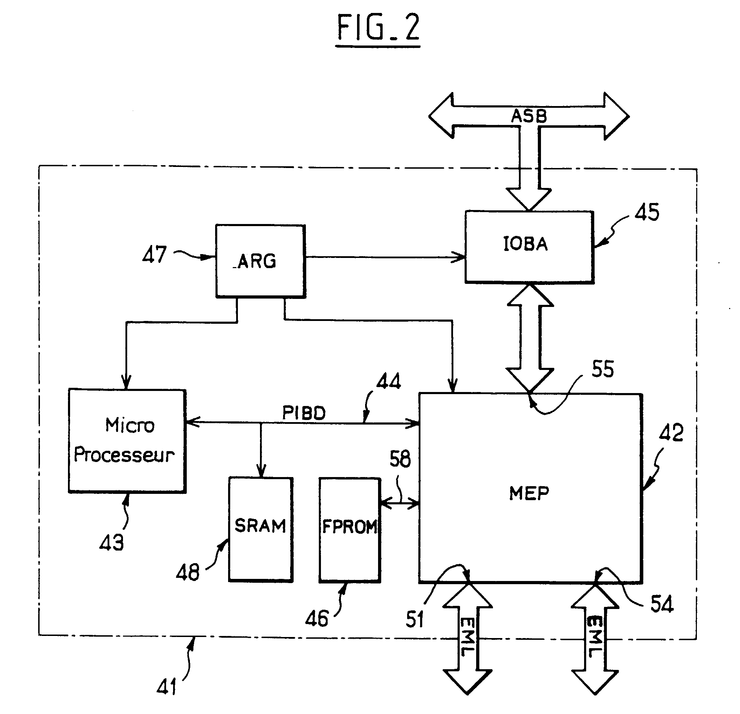

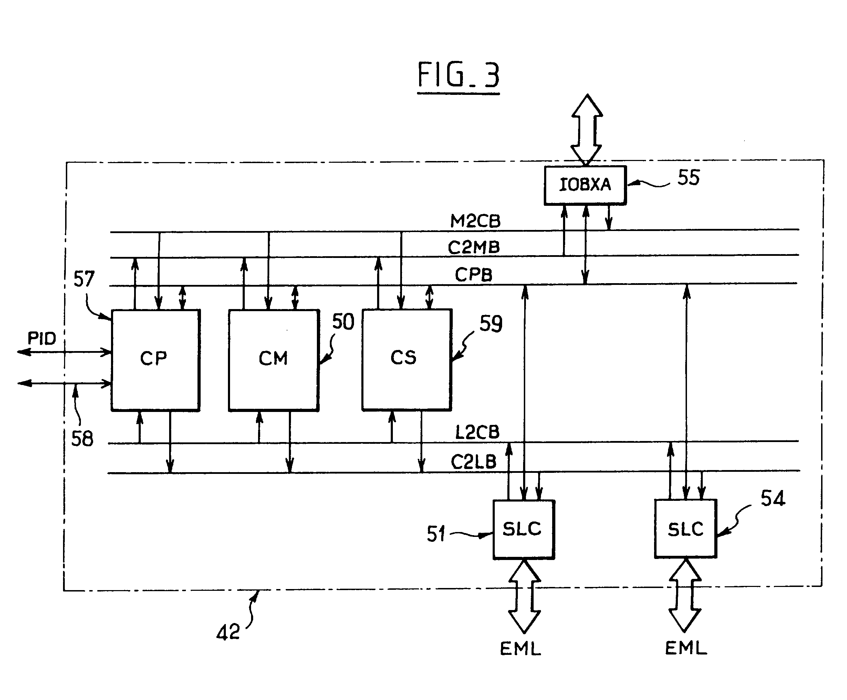

Une interface EMA ou un contrôleur mémoire EMC est réalisé au moyen d'un circuit 41 présenté plus en détail sur la figure 2. Le circuit 41 comprend essentiellement un circuit intégré MEP 42 détaillé à l'aide de la figure 3, synchronisé par un générateur d'horloge ARG 47 et piloté par un microprocesseur 43. Une mémoire permanente FPROM 46 contient un micro logiciel pour faire fonctionner le circuit intégré 42. Une mémoire à accès aléatoire SRAM 48 est prévue pour contenir les données qualifiant les transbordements pris en charge par le circuit 41. A l'initialisation du circuit 41, le circuit intégré 42 charge dans la mémoire 48, le micro logiciel contenu dans la mémoire 46. Pour ce faire, le circuit 42 accède directement à la mémoire 46 au moyen d'une liaison 58. La mémoire 46 garantit essentiellement la permanence des informations à l'initialisation alors que la mémoire 48 garantit les performances d'accès en fonctionnement. Si les standards de lecture écriture dans les mémoires 46 et 48 sont différents, par exemple sur un multiplet dans la mémoire 46 et sur huit multiplets dans la mémoire 48, le circuit intégré 42 fait les regroupements de multiplets nécessaires et génère les contrôles de parité adéquats. Un circuit d'adaptation bus IOBA 45 permet d'adapter le circuit 41 au bus système ASB pour le transfert de données entre le bus ASB et le circuit intégré 42. Le circuit 45 et le microprocesseur 43 sont synchronisés par le générateur d'horloge 47. Le microprocesseur 43 échange et traite les données de la mémoire 48 et du circuit 42 au moyen d'un bus PIBD 44 et du micro logiciel contenu dans la mémoire 48. Le circuit 42 comprend un port d'entrée sortie 55 en liaison avec le circuit d'adaptation 45 et deux ports d'entrée sortie 51 et 54 raccordés par liaison EML à un circuit distant identique au circuit 41. Un circuit 41 fonctionnant en EMA est raccordé à un circuit 41 fonctionnant en EMC. La largeur de chemin de données est identique sur les ports 51, 54 et 55 et égale à 2^{m} multiplets. L'intérêt de l'adaptateur 45 est de pouvoir supporter une adressabilité différente d'une adressabilité standard sur les ports 51, 54 et 55. Par exemple, l'adressage sur les ports 51, 54 et 55 peut se faire sur 40 bits alors que l'adressage de l'unité de mémoire principale MMU peut se faire sur 32 bits.

La figure 3 présente l'architecture du circuit intégré 42. Un composant interface processeur CP 57 permet l'échange de données pour qualifier un transbordement avec le microprocesseur 43 au moyen du bus PIBD. Le composant interface processeur 57 est directement relié à la mémoire 46 par la liaison 58, pour charger à l'initialisation dans la mémoire 48, le micro logiciel contenu de façon permanente dans la mémoire 46. Un composant transbordeur CM 50 est activé par le composant interface processeur 57 dans le cas où le circuit intégré 42 est monté sur un circuit 41 qui occupe la place d'une interface EMA. Un composant contrôleur CS 59 est activé par le composant interface processeur 57 dans le cas où le circuit intégré 42 est monté sur un circuit 41 qui occupe la place d'un contrôleur EMC.

Par le port 55 passent les données échangées avec une mémoire extérieure localisée dans le même cabinet que celui dans lequel le circuit 41 est monté. Si le circuit 41 est monté dans le calculateur 1, la mémoire extérieure est l'unité de mémoire principale MMU, si le circuit 41 est monté dans un cabinet 3 ou 4, la mémoire extérieure est l'unité de mémoire étendue EMU. Un bus M2CB transfert les données du port 55 vers le composant interface processeur 57, vers le composant transbordeur CM 50 ou vers le composant contrôleur CS 59. Un bus C2MB transfert les données du composant interface processeur 57, du composant transbordeur CM 50 ou du composant contrôleur CS 59 vers le port 55. Par les ports 51 et 54 passent les données échangées avec des mémoires extérieures distantes. Si le circuit 41 est monté dans le calculateur 1, la mémoire extérieure distante est l'unité de mémoire étendue EMU d'un cabinet 3 ou 4, si le circuit 41 est monté dans un cabinet 3 ou 4, la mémoire extérieure distante est l'unité de mémoire principale MMU d'un calculateur. Un bus L2CB transfert les données du port 51, 54 vers le composant interface processeur 57, vers le composant transbordeur CM 50 ou vers le composant contrôleur CS 59. Un bus C2LB transfert les données du composant interface processeur 57, du composant transbordeur CM 50 ou du composant contrôleur CS 59 vers le port 51, 54. Un bus CPB bidirectionnel permet au composant interface processeur 57 d'échanger des données avec les ports 51, 54, 55, avec le composant transbordeur 50 ou avec le composant contrôleur 59.

Le port 51 et les ports 54, 55 peuvent posséder une ou plusieurs entrées sur le bus C2MB et respectivement sur le bus C2LB ainsi que une ou plusieurs sorties sur le bus M2CB et respectivement sur le bus L2CB. Par exemple, la présence de deux entrées et de deux sorties sur un port permet de doubler la bande passante des échanges avec les mémoires distantes.

Le microprocesseur 43 exécute un micrologiciel préalablement chargé dans la mémoire 48 en fonction de données contenues dans la mémoire 48 et de données échangées avec le composant interface processeur 57.

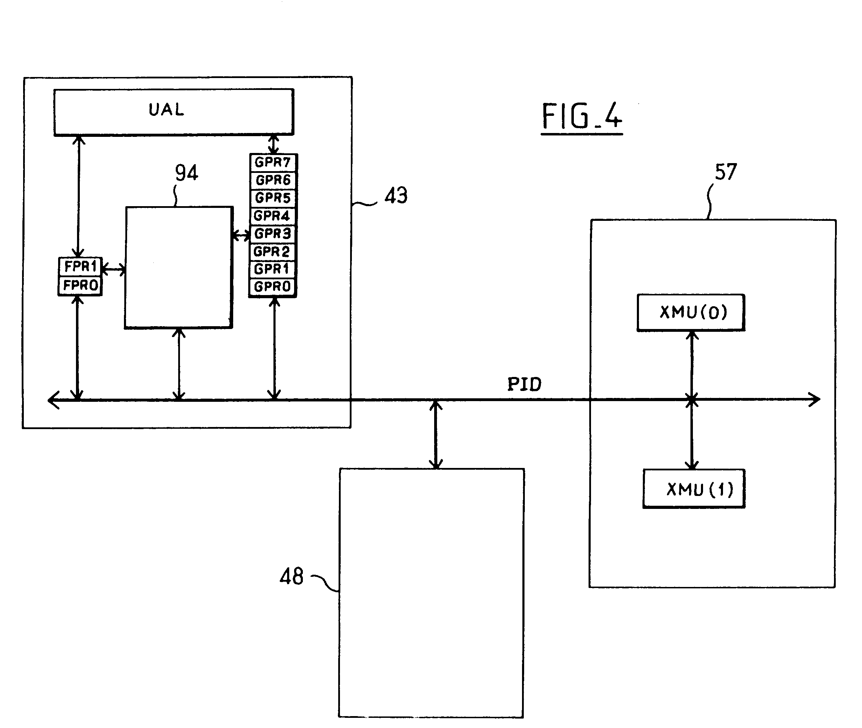

Comme on peut le voir figure 4, le microprocesseur 43 comprend une unité arithmétique et logique UAL traite le contenu de registres tels que des registres GPR0 à GPR7 à but de traitement général et des registres FPR0, FPR1 à but de traitement en virgule flottante. Les données rangées dans les registres GPR0 à GPR7, FPR0 et FPR1, sont chargées à partir d'une antémémoire 94 ou directement à partir du bus PID en provenance de la mémoire 48 ou du composant interface processeur 57. Les données rangées dans les registres GPR0 à GPR7, FPR0 et FPR1, directement à partir du bus PID, sont chargées en mode séquentiel (non burst en Anglais), c'est à dire valeur de registre par valeur de registre. Les données rangées dans l'antémémoire 94 sont chargées en mode rafales (burst en anglais) à partir du bus PID en provenance de la mémoire 48 ou du composant interface processeur 57, de façon à présenter dans le microprocesseur 43, une image des données contenues dans la mémoire 48 ou dans des registres du composant interface processeur 57 tels que des ports XMU0 ou XMU1. L'image de données présentées par l'antémémoire 94 permet un traitement rapide de ces données dans le microprocesseur 43. Le microprocesseur 43 et le composant interface processeur 57 peuvent posséder d'autres registres non essentiels à la compréhension du mode particulier de mise en oeuvre de l'invention ici décrit.

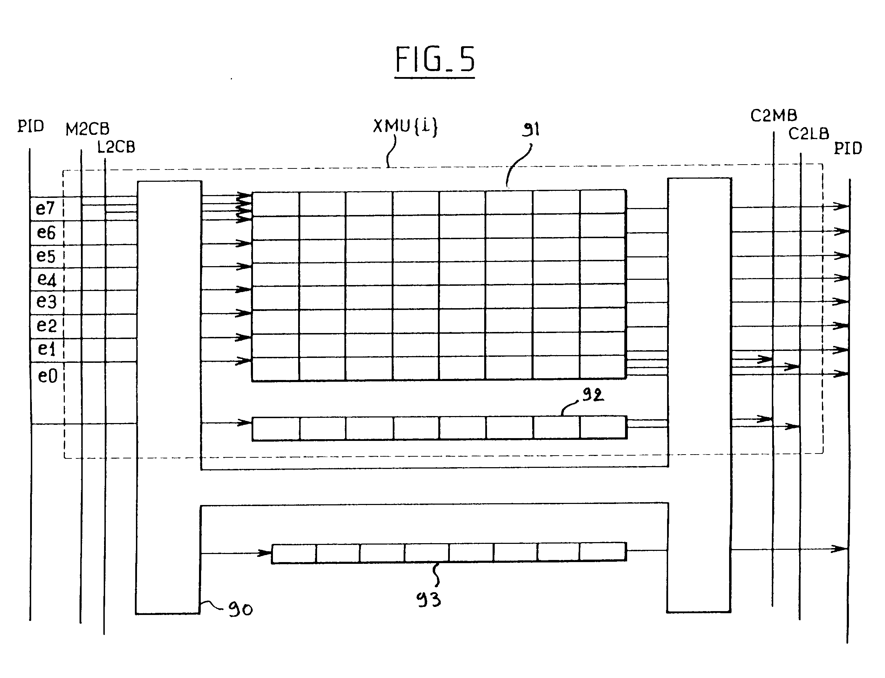

La figure 5 présente les ressources physiques du composant interface processeur 57 utiles à l'invention. Ces ressources sont réalisées à l'aide de registres, de bascules ou de mémoire à accès aléatoire.

Le composant interface processeur 57 comprend p ports XMU{i} identiques, i variant de 0 à p-1. Chaque port XMU{i} permet au microprocesseur 43 d'accéder en lecture et en écriture aux mémoires extérieures telles que l'unité de mémoire principale MMU et les unités de mémoire étendue EMU. Si, par exemple p égale 2, deux ports XMU0 et XMU1 permettent de doubler le flot de données entre le microprocesseur 43 et les mémoires extérieures et d'augmenter ainsi la bande passante des échanges. Deux ports XMU0 et XMU1 permettent encore un parallélisme dans l'exécution de tâches de niveaux de priorités différents, par exemple, en affectant le port XMU0 aux tâches de niveau application et le port XMU1 aux interruptions, on s'assure que les transmissions liées aux tâches de niveau application ne seront pas perturbées par les transmissions liées aux interruptions. Le composant interface processeur 57 comprend aussi au moins un registre d'état 93, tel qu'un registre nommé par la suite revstat et un bloc de logique câblée 90 pour gérer les accès en lecture et en écriture du port XMU{i} et d'autres registres du composant interface processeur 57 sur les bus PID, M2CB, L2CB, C2LB et C2MB. Le registre revstat et le bloc de logique câblée 90 sont éventuellement communs à plusieurs ports XMU{i}.

Chaque port XMU{i} comprend une pile 91 de type premier entré premier sorti, nommée par la suite x2y{i}d et un registre 92 nommé par la suite c2y{i}h.

La pile 91 est destinée d'une part à recevoir des données de l'unité de mémoire principale MMU par le bus M2CB, d'une unité de mémoire étendue EMU par le bus L2CB et du microprocesseur 43 par le bus PID, et d'autre part à émettre des données vers l'unité de mémoire principale MMU par le bus C2MB, vers une unité de mémoire étendue EMU par le bus C2LB et vers le microprocesseur 43 par le bus PID. La pile 91 est dimensionnée pour contenir un bloc de données entier de mémoire distante. La figure 5 représente le cas où le bloc de données est constitué dans les mémoires distantes de 64 multiplets de 9 bits, correspondant à la largeur du chemin de données sur les bus M2CB, L2CB, C2LB et C2MB. La pile 91 possède ici 8 entrées e_{q}, q variant de 0 à 7, qui accèdent chacune à 8 cellules de 9 bits, amenant ainsi la pile 91 à une taille de 64 cellules de 9 bits. La pile 91 est vue par le micrologiciel comme constituée de 4 tranches regroupant chacune 16 cellules de deux entrées consécutives. L'accès en lecture ou en écriture de la pile 91 par micrologiciel se fait au moyen de registres virtuels dont les adresses sur le bus PID se divisent en deux parties. Une première série de bits de l'adresse, identiques pour tous les registres virtuels, codent directement l'adresse physique d'une entrée de la pile 91. Une deuxième série de bits de l'adresse, identiques pour tous les registres virtuels mais de valeurs différentes pour distinguer chaque registre virtuel codent le résultat de l'accès en lecture ou en écriture de la pile 91.

Par exemple, des registres virtuels rwxmu9d{i}_{u} de huit multiplets de huit bits sont adressés physiquement dans la pile 91 x2y{i}d. Les 36 premiers bits d'une entrée e_{q} de la pile x2y{i}d sont accessibles en lecture et en écriture sur le bus PID dans le registre rwxmu9d{i}_{u} où {u} est remplacé par la valeur q/2. Les 36 derniers bits de l'entrée e_{q} de la pile x2y{i}d sont accessibles en lecture et en écriture sur le bus PID dans le registre rwxmu9d{i}_{u} où {u} est remplacé par la valeur q/2+1. Lors d'un accès en lecture ou en écriture d'un registre rwxmu9d{i}_q/2 ou rwxmu9d{i}_q/2+1, la logique câblée du composant interface processeur 57 décode la première série de bits de l'adresse pour brancher l'entrée e_{q} sur le bus PID et décode la deuxième série de bits de l'adresse pour obtenir le résultat suivant. Les 28 premiers bits d'un registre rwxmu9d{i}_q/2 ont des valeurs nulles et les 36 bits suivants ont les valeurs des 36 premiers bits de l'entrée e_{q}. Les 28 premiers bits d'un registre rwxmu9d{i}_q/2+1 ont des valeurs nulles et les 36 bits suivants ont les valeurs des 36 derniers bits de l'entrée e_{q}. Nous voyons ainsi que les 72 bits d'une entrée e_{q} sont accessibles en lecture ou en écriture sur le bus PID au moyen de deux registres virtuels rwxmu9d{i}_q/2 et rwxmu9d{i}_q/2+1 de 64 bits chacun. Pour une largeur imposée de chemin de données sur le bus PID, par exemple de 64 bits, il est possible de lire et d'écrire des ensembles de multiplets, chaque ensemble possédant un nombre de bits, par exemple 72, à priori incompatible. La lecture ou l'écriture de l'ensemble des 72 bits d'une entrée e_{q} à l'aide de deux mots de 64 bits procure une conversion de multiplets entre deux formats différents, par exemple neuf et huit bits sans perte d'information. L'accès en lecture et en écriture aux registres rwxmu9d{i}_{u} par le microprocesseur 43 se fait en mode rafales (burst en anglais), c'est à dire que si l'image d'un registre rwxmu9d{i}_{u} est présente dans l'antémémoire du microprocesseur 43, l'accès au registre rwxmu9d{i}_{u} se fait sur son image en antémémoire, si l'image du registre rwxmu9d{i}_{u} est absente (missed en anglais) de l'antémémoire, une image de l'ensemble des registres rwxmu9d{i}_{u}, pour une valeur donnée de {i} et pour toutes les valeurs de {u}, est transférée dans l'antémémoire du microprocesseur 43.

Par exemple encore, des registres virtuels rwxmu8d{i}_{u} de huit multiplets de huit bits sont adressés physiquement dans la pile 91 x2y{i}d. Parmi les 72 bits d'une entrée e_{q} de la pile x2y{i}d, 64 bits sont accessibles en lecture et en écriture sur le bus PID dans le registre rwxmu8d{i}_{u} où {u} est remplacé par la valeur q. Lors d'un accès en lecture ou en écriture d'un registre rwxmu8d{i}_q, la logique câblée du composant interface processeur 57 décode la première série de bits de l'adresse pour brancher l'entrée e_{q} sur le bus PID et décode la deuxième série de bits de l'adresse pour obtenir le résultat suivant. Les huit bits du r^{ième}, r variant de 0 à 7, multiplet du registre rwxmu8d{i}_q ont les valeurs des huit derniers bits du r^{ième} multiplet de l'entrée e_{q}. Lors d'un accès en lecture de la pile x2y{i}d, nous voyons que l'information du premier bit de chaque multiplet de neuf bits est perdue pour le microprocesseur 43. Cependant, cela est sans importance si le premier bit d'un multiplet de neuf bits ne contient aucune information utile au microprocesseur 43. Lors d'un accès en écriture de la pile x2y{i}d, la logique câblée du composant interface processeur 57 met une valeur nulle dans le premier bit de chaque multiplet de neuf bits. Pour une largeur imposée de chemin de données sur le bus PID, par exemple de 64 bits, il est possible de lire et d'écrire des ensembles de multiplets, chaque ensemble possédant un nombre de bits, par exemple 72, à priori incompatible. Il n'y a pas ici de conversion à proprement parler d'information entre deux formats différents, par exemple neuf et huit bits. L'accès en lecture et en écriture aux registres rwxmu8d{i}_{u} par le microprocesseur 43 se fait en mode rafales (burst en anglais), c'est à dire que si l'image d'un registre rwxmu8d{i}_{u} est présente dans l'antémémoire du microprocesseur 43, l'accès au registre rwxmu8d{i}_{u} se fait sur son image en antémémoire, si l'image du registre rwxmu8d{i}_{u} est absente (missed en anglais) de l'antémémoire, une image de l'ensemble des registres rwxmu8d{i}_{u}, pour une valeur donnée de {i} et pour toutes les valeurs de {u}, est transférée dans l'antémémoire du microprocesseur 43.

Le registre 92 est destiné à émettre des entêtes de messages sur le bus C2LB pour envoyer des requêtes en lecture ou en écriture vers une unité de mémoire étendue EMU, ou sur le bus C2MB pour envoyer des requêtes en lecture ou en écriture vers l'unité de mémoire principale MMU. Le registre 92 est dimensionné pour contenir une adresse et une longueur de bloc de données de mémoire distante et si le message transmis est une requête en lecture ou en écriture. Dans l'exemple de la figure 5, le registre 92 est constitué de huit multiplets de huit bits. L'accès en écriture du registre 92 par micrologiciel se fait au moyen de registres virtuels dont les adresses sur le bus PID se divisent en deux parties. Une première série de bits de l'adresse, identiques pour tous les registres virtuels, codent directement l'adresse physique du registre 92. Une deuxième série de bits de l'adresse, identiques pour tous les registres virtuels mais de valeurs différentes pour distinguer chaque registre virtuel codent le résultat de l'accès en écriture du registre 92.

Par exemple, des registres virtuels w[me]muh{i}_{u} de huit multiplets de huit bits sont adressés physiquement dans le registre 92 c2y{i}h. Un registre w[me]muh{i}_{u} est accessible en écriture à accès direct (non burst en anglais) par le microprocesseur 43 au moyen du bus PID. La valeur de [me] indique une mémoire extérieure accédée, par exemple mm pour l'unité de mémoire principale MMU ou em pour une unité de mémoire étendue EMU. La valeur de {i} indique la pile x2y{i}d à laquelle est associé ce registre et la valeur de {u} indique une entrée du port IOBXA ou une entrée parmi celles de ports SLC à laquelle est associé ce registre. Lorsque le micrologiciel accède en écriture le registre w[me]muh{i}_{u}, le bloc de logique câblée 90 charge les données écrites dans le registre d'en-tête c2y{i}h au moyen de la première série de bits de l'adresse sans modifier ces données.

Au moyen de la deuxième série de bits de l'adresse qui codent les valeurs de [me] et de {u}, le bloc de logique câblée 90 envoie les huit multiplets du registre c2y{i}h, en ajoutant un bit nul en tête de chaque multiplet, vers le bus C2MB si la deuxième série de bits de l'adresse codent une valeur de [me] égale à mm et vers le bus C2LB si la deuxième série de bits de l'adresse codent une valeur de [me] égale à em. Sur le bus C2MB, ces multiplets sont adressés sur l'entrée {u} du port IOBXA, codée par la deuxième série de bits de l'adresse du registre w[me]muh{i}_{u}. Sur le bus C2LB, ces multiplets sont adressés sur l'entrée {u} d'un port SLC, codée par la deuxième série de bits de l'adresse du registre w[me]muh{i}_{u}. Si le contenu du registre w[me]muh{i}_{u} indique une entête de requête en écriture, le bloc de logique câblée 90 envoie à la suite du contenu du registre w[me]muh{i}_{u}, le contenu de la pile x2y{i}d vers le même bus C2MB ou C2LB. Ainsi une écriture dans un registre w[me]muh{i}_{u} initialise un accès à la mémoire raccordée au port associé à ce registre. Le bloc de logique câblée 90 met les multiplets contenus dans l'entête au format de la mémoire accédée en ajoutant, si besoin est, le nombre de zéros nécessaires en début de multiplets reçus du microprocesseur 43.

Le registre revstat est accessible en lecture à accès direct par le microprocesseur 43. Il existe plusieurs adresses de lecture possibles sur le bus PID du registre revstat par le microprocesseur 43. Toutes ces adresses ont en commun, par exemple un certain nombre de bits de poids forts de valeurs identiques qui adressent physiquement le registre revstat, et des bits, par exemple de poids faibles, de valeurs différentes pour lire le registre revstat suivant des modes différents, le registre revstat étant alors vu comme autant de registres virtuels tels que revstat, revstati, revstatm0, revstatm1... Le registre revstat est un registre d'état du composant interface processeur CP, il contient entre autres des bits nommés it pour coder les origines de différentes interruptions, des bits de statut de ports XMU{i} tels que ceux nommés rpr{i} pour indiquer que la pile de données x2y{i}d a reçu des données en provenance d'un bus L2CB ou M2CB. Les lectures du registre revstat se distinguent en ce que lorsque celui-ci est nommé revstat, une lecture laisse ses bits en l'état, lorsque celui-ci est nommé revstati, une lecture remet à zéro les bit it, lorsque celui-ci est nommé revstatm0, une lecture remet à zéro les bits de statut du port XMUO, lorsque celui-ci est nommé revstatm1, une lecture remet à zéro les bits de statut du port XMU1... Ceci permet de détecter à chaque lecture les événements nouvellement apparus depuis la dernière lecture précédente.

L'annexe 1 présente un exemple simplifié de séquence permettant au microprocesseur la lecture d'un bloc de seize multiplets dans l'unité de mémoire principale MMU avec conversion du format de données. Cette lecture utilise comme ressources dans le circuit intégré MEP 42, les registres x2y0h et x2y0d du composant interface processeur 57. Dans le circuit intégré MEP 42, ces registres sont mis en communication avec l'unité de mémoire principale MMU au moyen du bus CPB et du port 55.

Les deux premières lignes de la séquence transmettent par micro logiciel au circuit intégré MEP, l'entête d'une requête de lecture dans une mémoire source, qui dans l'exemple où la mémoire source est l'unité de mémoire principale MMU, lui sera transmise par le port 55. En ligne 1, une instruction CFD (Load Floating Point Double en Anglais) charge en virgule flottante double précision l'adresse de la mémoire source codée sur les bits repérés s et une adresse dans la mémoire source codée sur les bits repérés a, dans le registre en virgule flottante double précision FPRO du microprocesseur 43. Par exemple, les bits repérés s mis à zéro signifient que la mémoire source est l'unité de mémoire principale MMU. En ligne 2, une instruction RFD range en virgule flottante double précision (STore Floating Point Double en Anglais), le contenu du registre FPRO dans le registre wmmuh0_1 du composant interface processeur 57. Le registre wmmuh0_1 étant en accès direct en écriture, le rangement s'effectue directement dans le registre physique c2y0h sans passer par l'antémémoire du microprocesseur 43. A l'écriture dans le registre c2y0h, le bloc de logique câblée 90 émet une entête de requête en lecture de l'adresse aaaaaaaaa vers la première entrée du port 55. Les instructions sur les registres en virgule flottante double précision permettent une utilisation optimale de la largeur du chemin de données sur le bus PID en mode non rafale, largeur par exemple de huit octets.

Les lignes 4 à 9 testent par micro logiciel que la réponse en lecture de l'unité de mémoire principale MMU a été reçue par le circuit intégré MEP 42. La ligne 4 est simplement une étiquette sur laquelle rebouclent les lignes 5 à 8 jusqu'à détection de l'arrivée de données dans le port XMU0 en ligne 9. En ligne 5, l'instruction CFD charge en virgule flottante double précision le contenu du registre revstatm0 dans le registre en virgule flottante double précision FPR0 du microprocesseur 43. Le chargement du registre revstatm0 provoque le transfert du contenu du registre 93 vers le registre FPR0, immédiatement sans passer par l'antémémoire du microprocesseur 43 car le registre revstatm0 est en accès direct en lecture. Le nom donné au registre 93 déclenche ensuite la remise à zéro du bit rpr0 par le bloc de logique câblée 90. En ligne 6, l'instruction RFD range le contenu du registre FPR0 comme donnée de l'antémémoire du microprocesseur 43. En ligne 7, l'instruction CMC charge ladite donnée de l'antémémoire dans le registre à but général GPR0 pour effectuer dessus des opérations autres que purement arithmétiques telles que par exemple un test. Les lignes 8 et 9 font un test sur la valeur du bit rpr0 de façon à répéter les instructions des lignes 4 à 7 jusqu'à ce que le bit rpr0 soit à 1. Le bit rpr0 à 1 signifiant que la réponse en lecture est reçue dans la pile x2y0d, le micrologiciel boucle donc en scrutant le contenu du registre 93 jusqu'à réception de la réponse en lecture dans la pile x2y0d, où alors est déclenchée la lecture de la pile x2y0d, réalisée par les lignes 11 à 20.

La ligne 11 est simplement une étiquette de branchement d'un test positif réalisé par les lignes 4 à 9. En ligne 12, une instruction VLC élimine de l'antémémoire (Data Cache Bloc Flush en Anglais), la présence éventuelle du bloc de huit mots de 32 bits commençant au premier mot du registre rwxmu9d0. On s'assure ainsi de ne pas lire dans l'antémémoire des valeurs périmées des registres rwxmu9d0 à rwxmu9d0_3. A partir de la ligne 13, le chargement du registre rwxmu9d0 dans le registre GPR0 rafraîchit le contenu de l'antémémoire en mode rafale au moyen d'une instruction CMC (Chargement de Mot via l'Antémémoire ou Load Word & Zero en Anglais), avec le contenu des registres rwxmu9d0 à rwxmu9d0_3. Les effets de bord font que le contenu du registre GPR0 contient le premier mot, c'est à dire les quatre premiers octets du registre rwxmu9d0, seuls les quatre derniers bits de ce premier mot sont représentatifs d'un contenu de la pile x2y0d. Ensuite, la présence dans l'antémémoire du microprocesseur 43, des huit mots contenus dans les registres rwxmu9d0 à rwxmu9d0_4 accélère leur traitement par le micrologiciel. En ligne 14, la translation de quatre octets sur l'instruction CMC charge le deuxième mot du registre rwxmu9d0 dans le registre GPR1 dont tous les bits sont représentatifs d'un contenu de la pile x2y0d. En lignes 15 à 20, le contenu des six mots restants est chargé dans les registres GPR2 à GPR7. Il est possible alors de traiter par micrologiciel une tranche de la pile x2y0d, celle correspondant aux entrées e0 et e1.

L'annexe 2 présente un exemple simplifié de séquence permettant au microprocesseur l'écriture d'un bloc de seize multiplets dans l'unité de mémoire principale MMU avec conversion du format de données. Cette lecture utilise comme ressources dans le circuit intégré MEP 42, les registres rwxmu8d1 à rwxmu8d1_7 du composant interface processeur 57. Dans le circuit intégré MEP 42, ces registres sont mis en communication avec l'unité de mémoire principale MMU au moyen du bus CPB et du port 55.

En lignes 1 et 2, une remise à zéro de ligne antémémoire au moyen d'une instruction RZLC (Data Cache Bloc Flush en Anglais) permet le forçage d'une image des registres rwxmu8d1 à rwxmu8d1_3 et des registres rwxmu8d1_4 à rwxmu8d1_7 dans l'antémémoire. Cette image constitue celle du bloc à écrire dans la mémoire extérieure.

Les lignes 4 à 19 effectuent le chargement des registres GPR0 à GPR15 au moyen d'une instruction RMC (Store Word en Anglais), dans les lignes de l'antémémoire 94 qui représentent les registres rwxmu8d1 à rwxmu8d1_7 du circuit intégré MEP. Si le processus est interrompu, s'il y a collision, les lignes d'antémémoire sont sauvegardées et restaurées quand le processus est réactivé.

En lignes 21 et 22, une instruction VLC de vidage ligne antémémoire (Data Cache Bloc Flush en Anglais) transfert en mode rafale le bloc contenu dans l'antémémoire physiquement vers les registres rwxmu8d1 à rwxmu8d1_7, c'est à dire dans la pile 91.

En ligne 24, l'instruction CFD charge l'adresse de la mémoire de destination codée sur les bits repérés s et une adresse dans la mémoire de destination codée sur les bits repérés a, dans le registre en virgule flottante double précision FPR0 du microprocesseur 43. Par exemple, les bits repérés s mis à zéro signifient que la mémoire de destination est l'unité de mémoire principale MMU 9. Selon un autre exemple, les bits repérés s mis à (0,1) ou à (1,0) signifient que la mémoire de destination est l'unité de mémoire étendue EMU 8 ou respectivement 12. En ligne 25, une instruction RFD range en virgule flottante double précision (STore Floating Double en Anglais), c'est à dire par exemple sur huit octets, le contenu du registre FPR0 par accès direct dans le registre wmmuh1_1 qui est physiquement le registre 92 du composant interface processeur 57.

Les lignes 27 à 32 constituent une séquence de boucle d'attente active de fin d'écriture en mémoire extérieure, par exemple MMU. La ligne 27 est simplement une étiquette sur laquelle reboucle la séquence d'attente. En ligne 28, l'instruction CFD charge par accès direct le contenu du registre d'état 93, nommé revstatm1, dans le registre FPR0. En ligne 29, l'instruction RFD range dans l'antémémoire 94 le contenu du registre FPRO qui est rechargé en ligne 30 dans le registre GPRO au moyen de l'instruction CMC. Ceci permet de faire en ligne 31 un test sur une valeur de bit repérée rpr1. Une valeur nulle du bit rpr1 indique que le transfert de la pile 91 vers la mémoire extérieure n'est pas terminée, et donc qu'il faut réitérer la séquence par branchement sur l'étiquette de la ligne 27. Une valeur non nulle du bit rpr1 indique que le transfert vers la mémoire extérieure est terminé ou interrompu. La séquence se branche alors vers une séquence d'analyse qui détermine une fin d'écriture dans la mémoire extérieure uad1 ou une erreur err1. Cette séquence permet de lancer une autre écriture pour augmenter la bande passante ou d'avoir une autre activité en attendant de relancer une écriture.

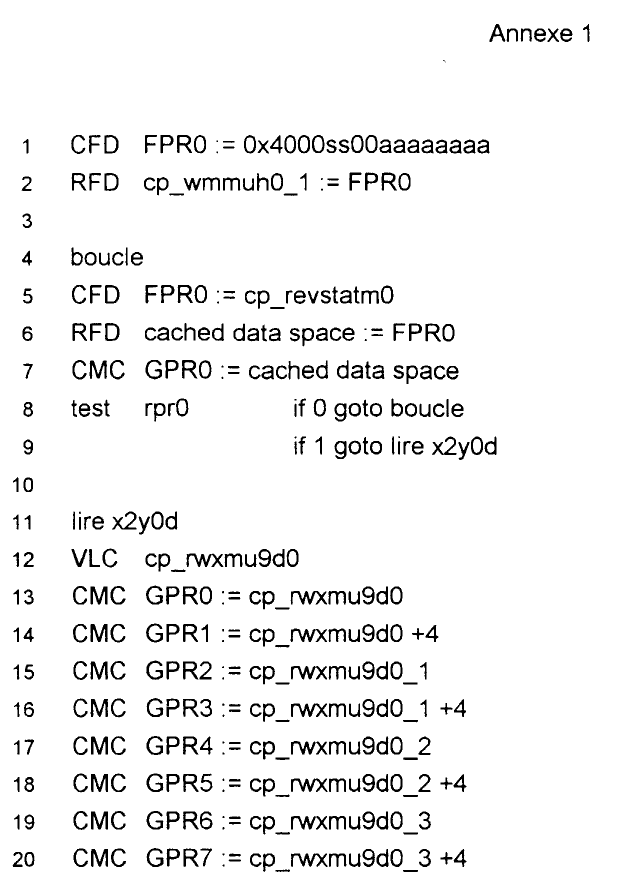

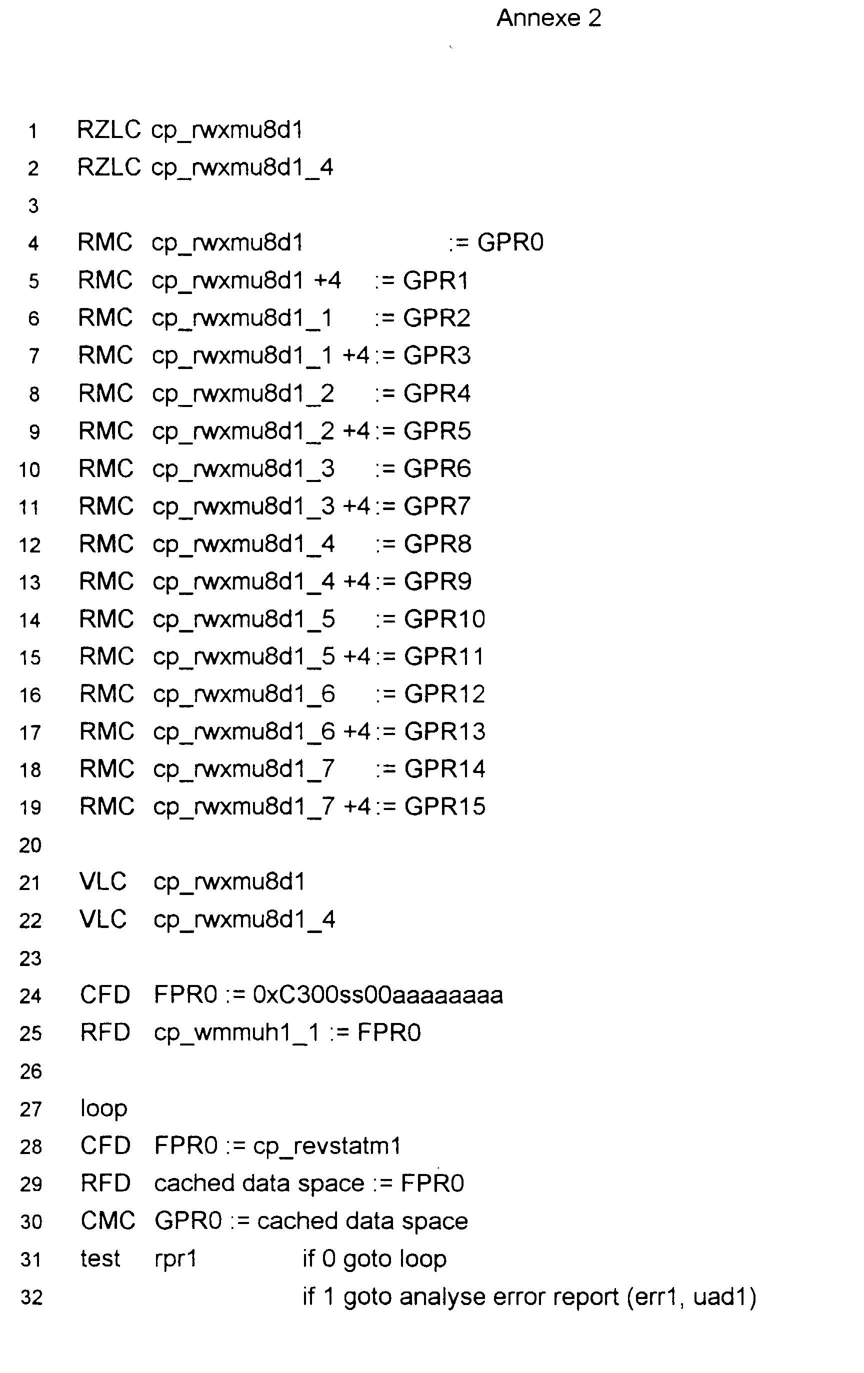

## Revendications

1. Circuit électrique (5,7,41) comprenant:
- un microprocesseur (43) pour échanger des données avec une mémoire (8,9,12) hors de l'espace mémoire du microprocesseur, ledit microprocesseur comprenant une antémémoire (94),
- un circuit intégré (42) pour servir d'interface entre le microprocesseur (43) et la mémoire (8,9,12),
caractérisé en ce que le circuit intégré (42) comprend:
- une pile (91) dimensionnée pour contenir un bloc de données de la mémoire (8,9,12), telle que le bloc de la mémoire (8,9,12) soit vu comme un ou plusieurs blocs dans l'antémémoire (94),
- un registre (93) appartenant à l'espace mémoire du microprocesseur (43), destiné à contenir les coordonnées d'accès à la mémoire (8,9,12).

2. Circuit électrique (5,7,41) selon la revendication 1, caractérisé en ce que l'adressage de la pile (91) dans l'espace mémoire du microprocesseur code une adresse physique de bloc et un mode de lecture ou d'écriture dudit bloc dans la pile (91).

3. Circuit électrique (5,7,41) selon la revendication 1, caractérisé en ce que l'adressage du registre (93) dans l'espace mémoire du microprocesseur code son adresse physique et une entrée de port (51,54,55) du circuit intégré (42) vers une mémoire (8,9,12).

4. Circuit électrique (5,7,41) selon la revendication 1, caractérisé en ce qu'il est utilisé pour faire transiter des données codées sur neuf bits vers des données codées sur huit bits.

5. Calculateur caractérisé en ce qu'il comprend un circuit électrique selon l'une des revendications précédentes.

6. Procédé pour obtenir dans une antémémoire (94) de microprocesseur (43) une image d'un bloc de donnée à lire ou à écrire dans un espace mémoire (8,9,12) extérieur à celui du microprocesseur (43), caractérisé en ce qu'il comprend une étape de chargement par rafales du dit bloc à partir de registres (91) nommés d'une première façon (rwxmu9d) pour lire ledit bloc et de rangement par rafales du dit bloc dans les mêmes registres (91) nommés d'une deuxième façon (rwxmu8d) pour écrire ledit bloc.

7. Procédé selon la revendication 6, caractérisé en ce que la première façon de nommer (rwxmu9d) le registre (91), code son chargement dans le microprocesseur (43) par multiplets compatibles avec une largeur de chemin de données accessible à des registres (GPR0,GPR7) du microprocesseur (43).

8. Procédé selon la revendication 6, caractérisé en ce que la deuxième façon de nommer (rwxmu8d) le registre (91), code son rangement à partir de registres (GPR0,GPR15) du microprocesseur (43) par multiplets compatibles avec un nombre de bits possédés par un ensemble de multiplets de l'espace mémoire extérieur.
